# EUROPEAN PATENT SPECIFICATION

(11) **EP 3 070 882 B1**
(45) Date of publication and mention of the grant of the patent: **04.10.2017**
(21) Application number: 15000826.6
(22) Date of filing: 20.03.2015
(51) Int. Cl.: H04L 12/26, H04W 28/06, H04L 12/835

(54) **Method for providing data to a mobile terminal**
VERFAHREN ZUR BEREITSTELLUNG VON DATEN AUF EINEM MOBILEN ENDGERÄT
PROCÉDÉ PERMETTANT DE FOURNIR DES DONNÉES À UN TERMINAL MOBILE

(43) Date of publication of application: 21.09.2016
(73) Proprietor: Giesecke+Devrient Mobile Security GmbH, 81677 München (DE)
(72) Inventor: Tea, Vui Huang, SE-12061 Stockholm (SE)

(56) References cited:
- EP-A1- 2 028 910
- "Smart Cards; Transport Protocol for UICC based Applications; Stage 1 (Release 6); ETSI TS 102 124", IEEE, LIS, SOPHIA ANTIPOLIS CEDEX, FRANCE, vol. SCP-WG1, no. V6.1.0, 1 December 2004 (2004-12-01), XP014027288, ISSN: 0000-0001
- MATHIS J HEFFNER PSC M: "Packetization Layer Path MTU Discovery; rfc4821.txt", 20070301, 1 March 2007 (2007-03-01), XP015050669, ISSN: 0000-0003

## Description

### Field of the Invention

The invention relates to mobile communications in general and in particular to methods and devices for providing data to a mobile terminal containing a secure element, such as a subscriber identity module (SIM) or an embedded universal integrated circuit card (eUICC), in a mobile communications system.

### Background of the Invention

Communicating by means of a mobile terminal, such as a mobile phone, via a public land mobile network (PLMN; also referred to as a mobile or cellular communications network herein) operated by a mobile network operator (MNO) generally requires the mobile terminal to be equipped with a secure element for securely storing data uniquely identifying the user of the mobile terminal (also called subscriber). For instance, in the context of a mobile terminal configured to communicate according to the Global System for Mobile Communications (GSM), currently the world's most popular standard for mobile communications systems, the secure element is called a subscriber identity module (SIM) and is usually provided in the form of a smart card. According to the GSM standard, the technical features of which are defined by a large number of interrelated and mutually dependent specifications published by the ETSI standardization organization, the SIM contains subscription credentials for authenticating and identifying the user of the mobile terminal, including in particular an International Mobile Subscriber Identity (IMSI) and an authentication key Ki. These subscription credentials are generally stored on the SIM as part of a subscription profile by the SIM manufacturer/vendor or the MNO during a SIM personalization process prior to providing the user of the mobile terminal with his SIM. A non-personalized SIM is generally not suited for use in a mobile terminal, i.e. using the services provided by a PLMN with a non-personalized SIM without a subscription profile is not possible.
It is known to manage secure elements, such as SIMs, over-the-air (OTA) using standardized protocols carried over SMS (short message service) or IP (Internet protocol) communication channels using an already established connection in a cellular communications network. WO 2010/093312, for instance, describes a method for OTA activation and management of a SIM using an ODA (On Demand Activation) application adapted to activate and manage a SIM after it has been authenticated by the cellular communications network.
It is foreseeable that in the future there will be generally probably several different communication channels available for OTA management of a secure element, i.e. for providing data to a secure element. Consequently, there is a need for methods and devices that optimize data transfer to a mobile terminal, in particular a secure element.

Technical Specification ETSI TS 102 124 v6.1.0 (2014-12) "Smart Cards; Transport Protocol for UICC based Applications; Stage 1 (Release 6)" discloses a transport protocol between secure elements in mobile terminals and OTA servers where an indication is given for performing negotiation to establish a maximum PDU size.

### Summary of the Invention

The above object is achieved according to the present invention by the subject- matter of the independent claims. Preferred embodiments of the invention are defined in the dependent claims.
The present invention is based on the principle of optimizing data transfer to the secure element by optimizing a buffer size of sent data fragments. Accordingly the invention is directed to a method of providing data from a server to a mobile terminal, which includes a secure element, and is configured to communicate with the server via a plurality of communication channels, including a mobile communications network. The method comprises initiating a communication between a secure element and a server via at least one of the plurality of communication channels, sending at least one data packet, in particular a test data packet from a server, in particular a buffer sizing test server, to the mobile terminal, in particular the secure element, wherein the test data packet can be divided into a plurality of data fragments, wherein each data fragment has a predetermined, equal buffer size, measuring the elapsed data transfer time, varying the buffer size to a different buffer size, repeating the steps of measuring and varying until a minimum data transfer time for the test data packet is determined.

Each component, i.e. the server, the mobile terminal, the secure element and/or the communication channel has a different range of buffer sizes in which it can be operated and in which an optimal performance of each individual component can be achieved. The buffer size specifies, for instance, the number of bytes request by the secure element in a BIP OPEN CHANNEL command that creates a communication session. The buffer size can range, for instance, from 1 to 65.535 bytes.

By varying the buffer size until a minimum data transfer time for the transfer of the test data packet can be determined, it is advantageously possible to determine the optimum buffer size. The optimum buffer size is the size at which the highest overall data transfer speed can be achieved. Currently most MNOs set the buffer size to a fixed, predetermined buffer size. A buffer size that is too big, bears the risk that at least one component might not be able to support the buffer size. As a consequence, the data transfer speed could be reduced or the data transfer could fail. In case the buffer size is too small, the transfer data has to be fragmented into an unnecessarily high amount of fragments. This can lead to a large overhead and/or a severe reduction in data transfer speed.

According to an embodiment of the invention, the step of varying the buffer size comprises increasing and/or reducing the buffer size. In this way, the optimal buffer size can be determined in an efficient way.

Moreover, according to another embodiment, the step of increasing the buffer size comprises increasing the buffer size by a magnitude of 100% compared to the previous predetermined buffer size, wherein a starting buffer size of the predetermined buffer size can be 1,2,4,8,16,32, 64,128, 256, 512 bytes, etc. By doubling the buffer size, it can easily be determined whether the increased buffer size leads to an increase or reduction in transfer speed.

In addition or alternatively, the step of increasing the buffer size comprises varying the buffer size by a magnitude of 50% compared to the previous predetermined buffer size, if, when increasing the buffer size, it is determined that the buffer size, which was increased by a magnitude of 100% compared to the previous predetermined buffer size, is not supported by the mobile terminal and/or leads to an increase of the data transfer time. This step can be repeatedly carried out until the minimum data transfer time is determined. Moreover, by increasing and/or decreasing the buffer size by 50%, it can be advantageously determined whether the "half-buffer-size" leads to a reduction in data transfer time.

For instance, either the mobile terminal, in particular the secure element, and/or the server is adapted to measure the elapsed data transfer time. In this way a reliable measurement of the data transfer time can be carried out.

In order to ensure that the determination of the optimal buffer size is correct, it is possible - according to another embodiment - to send the same test data packet a plurality of times using the same predetermined buffer size. Thus, the optimal buffer size can be verified with little effort. Alternatively the server can measure the elapsed data transfer time.

According to another embodiment of the invention, the step of initiating a communication between the secure element and the server is triggered by the secure element determining a change of environment. In particular a change of environment can be a change of the mobile terminal in which the secure element is arranged, a change of location at which the secure element is located, a change of a firmware installed on the mobile terminal, and/or a change of a mobile network to which the secure element is connected. In addition the communication can be triggered based on whether the secure element is in roaming mode, whether (free) wireless-LAN is available, the time of the day, in order to avoid maximum data consumption peaks of the majority of users of the mobile terminal, and/or whether the secure element is provided with a premium or standard subscription. Thus, it is possible to advantageously carry out the determination of the minimum data transfer time whenever a "change of environment" occurs.

In line with another embodiment of the invention the secure element - when determining a change of environment - is adapted to check whether a status command issuance interval has been amended by receiving a start time - after the change of environment - from a time reference server, by awaiting a predetermined amount of status commands, by receiving an end time from the time reference server, and by dividing the difference between the start time and the end time through the predetermined amount of status commands. The amount of status commands can be - for instance - 5,10,20, 30, 50,100, etc. As the status command issuance interval may vary between different models of the mobile terminal, between different vendors of the mobile terminal and between different firmware versions of the mobile terminal, it is advantageous to know the status command issuance interval in order to ensure optimum data transfer rates.

Moreover, whenever the secure element determines the change of environment, the secure element, in particular an applet on the secure element, determines an associated bearer, wherein the bearer is selected from a list of available bearers. In this way the most economic and/or efficient bearer can be advantageously selected depending upon the environment of the secure element.

According to yet another embodiment of the invention, when sending data to the mobile terminal, the server uses at least two different data destination addresses (DDA) associated to the mobile terminal. By the nature of the Internet, depending on where the secure element is, i.e. the geographic position of the secure element, in particular in terms of PLMN the secure element is connected to, and how it is connected to the Internet, different (internet) gateways will have different network paths to the secure element. Different network paths to the secure element, however, also imply different data transfer rates. For instance, the connection speed of different network nodes, the maximum data transfer rate and the reliability of the data transfer can influence the over-all data transfer speed. Accordingly, by choosing between at least two different DDAs with which the secure element is connected to the internet, the data transfer speed can be significantly increased.

The advantages of the features and aspects of the present invention are not limited to sending data from a server to a mobile terminal. In particular, as mobile networks may have different upload and download capabilities, the determination of the optimum upload speed, i.e. from the mobile terminal to the server, is also important.

In this regard a method of providing data from a mobile terminal to a server, wherein the mobile terminal comprises a secure element and is configured to communicate with the server via a plurality of communication channels, including a mobile communications network, may comprise initiating a communication between the secure element and a server via at least one of the plurality of communication channels, sending at least one data packet, in particular a test data packet, from the mobile terminal to the server, wherein the test data packet can be divided into a plurality of data fragments, wherein each data fragment has a predetermined buffer size, measuring the elapsed data transfer time; varying the buffer size to a different buffer size; repeating the steps of measuring and varying until a minimum data transfer time for the data packet is determined.

By varying the buffer size until a minimum data transfer time for the transfer of the test data packet can be determined, it is advantageously possible to determine the optimum buffer size. The optimum buffer size is the size at which the highest overall data transfer speed can be achieved. Currently most MNOs set the buffer size to a fixed, predetermined buffer size. A buffer size that is too big, bears the risk that at least one component might not be able to support the buffer size. As a consequence, the data transfer speed could be reduced or the data transfer could fail. In case the buffer size is too small, the transfer data has to be fragmented into an unnecessarily high amount of fragments. This can lead to a large overhead and/or a severe reduction in data transfer speed.

Aspects, triggers, etc. described above with respect to providing data from a server to a mobile terminal likewise apply to providing data from a mobile terminal to a server. As a consequence, a further description of these aspects is omitted in this description in order to facilitate the ease of understanding of the advantageous aspects of the invention.

### Brief description of the drawings

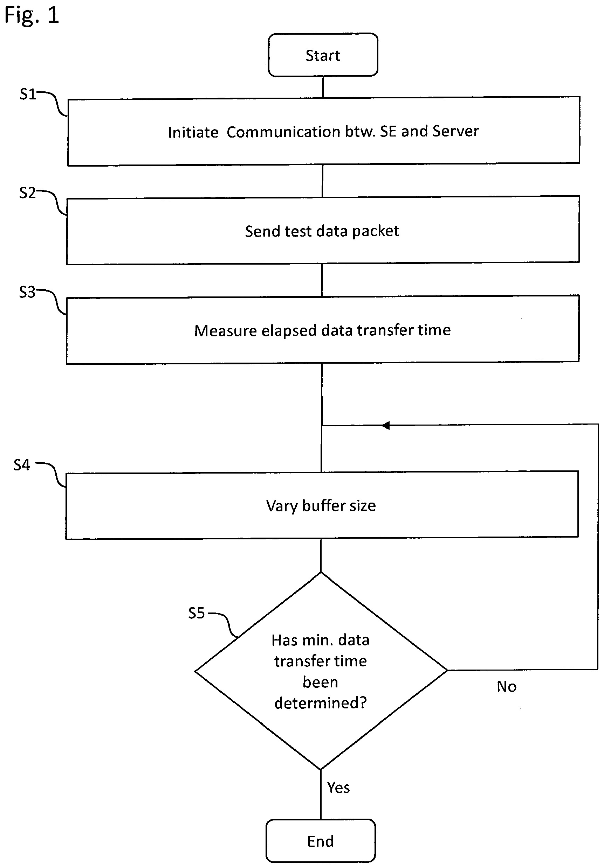

Fig. 1 is a flow diagram indicating the steps of a method of providing data from a server to a mobile terminal according to an embodiment of the invention.

### Description of embodiments of the invention

The following is an exemplary description of an embodiment of the invention with reference to Fig. 1. The following description shall not limit the invention, but demonstrate an exemplary way of carrying out a method according to the invention.

During the use of a mobile terminal, such as a mobile phone, a tablet, a wearable, etc., from time to time a communication between a server (of a mobile network operator) and the mobile terminal, in particular a secure element in the mobile terminal, is necessary. As mentioned above, the secure element can be embodied as a subscriber identity module (SIM) or an embedded universal integrated circuit card (eUICC). Such a communication can be, but is not limited to, the transfer of a new/ amended subscription from the server to the mobile terminal, in particular the secure element of the mobile terminal.

When transferring data to a plurality of mobile terminals, it is vital to the MNO to carry out this transfer in a most efficient way. In particular, when considering the amount of secure elements handled by a single MNO, one quickly recognizes that already small measures, which help to improve the data transfer, may have a significant effect on the quality/speed of data transfer overall. Failures in data transfer between the server and the secure element may lead to a compromised performance of the overall network due to the circumstance that the secure element, for instance, might not be provided with the latest version of a subscription necessary to operate this specific secure element.

When providing data from a server to a mobile terminal, in particular a secure element (SE), it is, in a first step S1, necessary to initiate a communication between the server and the secure element (SE).

After initiating the communication between the server and the secure element (step S1), a test data packet is sent from the server to the mobile terminal (step S2). The data packet can be a test data packet, wherein the test data packet is divided into a plurality of data fragments and wherein each data fragment has a predetermined buffer size. In particular, the buffer size of the individual data fragments within one test data packet does not vary. Instead, the buffer size within the test data packet is equal. For instance, the buffer size can be 1, 2, 4, 8,16,32, 64,128, 256, 512 bytes, etc.

In a next step (step S3) the necessary, elapsed data transfer time is measured. The measurement can be conducted, for instance, with the mobile terminal or the server.

After the data transfer time has been measured, the buffer size of the data fragments of the test data packet is varied (step S4). In particular, the buffer size is increased. The increase of the buffer size could be an increase of 100% compared to the previous buffer size. After the buffer size has been increased, the test data packet is sent again from the server to the mobile terminal and the elapsed data transfer time is measured again. The elapsed data transfer time is compared to the previous data transfer time (which used a different (smaller) buffer size). If the data transfer time is shorter, the method continues to increase the buffer size. If the data transfer time is longer, the buffer size is increased and/or decreased in smaller increments, for instance, by a magnitude of 50% compared to the previous predetermined buffer size. The process is repeated until the minimum data transfer time has been determined (step S5).

The following table shows exemplary buffer sizes:

| **Round** | **Buffer sizes** | **Estimated ideal buffer size** | **Actual ideal buffer size** | **Accuracy** |
|---|---|---|---|---|
| 1 | 512, 1024, 1536 | 1024 | 1280 | 80% |
| 2 | 1024, 1280, 1536 | 1280 | 1280 | 100% |

In order to ensure that the correct buffer size is determined, whenever a minimum data transfer time is determined, this test data packet can be sent a plurality of times (using the same predetermined buffer size) in order to verify the optimum buffer size.

The method can be triggered (carried out) whenever the secure element and/ or the mobile terminal determines a change of environment. The change of environment being a change of the mobile terminal in which the secure element is arranged, a change of location at which the secure element is located, a change of firmware installed on the mobile terminal, and/or a change of a mobile network to which the secure element is connected. The present invention is not limited to these examples, as other triggers are feasible.

Moreover, whenever the secure element determines a change of environment, the secure element is adapted to find out whether a status command issuance interval has been amended. The determination of an amended status command issuance interval can be carried out by receiving a start time from a time reference server, by awaiting a predetermined amount of status issuance interval, by receiving an end time from the time reference server, and by dividing the difference between the start time and the end time through the predetermined amount of status issuance interval. In this way a correct determination of the status command issuance interval can be effected.

When detecting a change of environment, the secure element and/ or the mobile terminal is adapted to choose which bearer to use to establish the data transfer session. The bearer could be, for instance, GPRS, UTRAN packet service, E-UTRAN, Wi-Fi, etc. The optimum bearer can be determined based on the location of the mobile terminal, whether the secure element is in roaming mode, whether a setting has been made what the optimum bearer for the mobile terminal is (for instance Wi-Fi), the time of the day, and whether the user of the secure element has a standard or a premium subscription.

Further advantageous effects can be achieved, if the server, when sending data to the mobile terminal, uses at least to different data destination addresses associated to the mobile terminal. Different data destination addresses imply different routes through the internet in order to arrive at the mobile terminal. Different routes usually also imply different connection speeds. By determining the fastest connection speed, the data transfer time can be further enhanced.

Although the invention has been described with respect to a data packet being sent from a server to the mobile terminal, it is also possible to send a test data packet from the mobile terminal to a server in order to determine the optimum buffer size (upload). In this regard, as already mentioned above, the direction of the data transfer is reciprocated, i.e. the data packet, in particular the test data packet, is sent from the mobile terminal to the server. Hence, the same principles as when downloading data from the server apply.

The optimal buffer size for upload and download may not be symmetric, as the mobile data network used may be asymmetric, e.g. LTE provides up to 300 Mbit/s for downlink and 75 Mbit/s for uplink. HSDPA (High Speed Downlink Packet Access) improves the downlink of the data transmission, while HSUPA (High Speed Uplink Packet Access) improves the uplink or transmission from the mobile terminal to the server.

In addition, when the SIM is attempting to perform on upload or download and notices that the transmission speed is unusually low (based on a predefined limit, or a rolling, recorded history of previous transmission speeds) or unsuccessful, the SIM can initiate reselection of associated bearer or data destination addresses (DDA). This covers the situation when a particular transmission network is down or overloaded.

## Claims

1. Method of providing data from a server to a mobile terminal that comprises a secure element and is configured to communicate with the server via a plurality of communication channels, including a mobile communications network,
wherein the method comprises the following steps:
initiating a communication between the secure element and a server via at least one of the plurality of communication channels,
sending at least one test data packet from the server, in particular a buffer sizing test server, to the mobile terminal, wherein the test data packet can be divided into a plurality of data fragments, wherein the data fragments have a predetermined equal buffer size, and the method being **characterised by**
measuring the elapsed data transfer time for the test data packet; varying the buffer size for data fragmentation to a different buffer size; and repeating the steps of sending the test data packet, measuring and varying until a minimum data transfer time for the test data packet is determined.

2. Method according to claim 1, wherein the step of varying the buffer size comprises increasing the buffer size.

3. Method according to claim 2, wherein the step of increasing the buffer size comprises increasing the buffer size by a magnitude of 100% compared to the previous predetermined buffer size, wherein a starting buffer size of the predetermined buffer size is 512 bytes.

4. Method according to claim 3, wherein the step of increasing the buffer size comprises varying the buffer size by a magnitude of 50% compared to the previous predetermined buffer size, if, when increasing the buffer size, it is determined that the buffer size, which was increased by a magnitude of 100% compared to the previous predetermined buffer size, is not supported by the mobile terminal and/ or leads to an increase of the data transfer time.

5. Method according to any one of the preceding claims, wherein the mobile terminal, in particular the secure element, and/ or the server is adapted to measure the elapsed data transfer time.

6. Method according to any one of the preceding claims, wherein the same test data packet can be sent a plurality of times using the same predetermined buffer size in order to determine whether the elapsed data transfer time varies.

7. Method according to any one of the preceding claims, wherein the step of initiating a communication between the secure element and the server is triggered by the secure element determining a change of environment, in particular a change of the mobile terminal in which the secure element is arranged, a change of location at which the secure element is located, a change of a firmware installed on the mobile terminal, and/or a change of a mobile network to which the secure element is connected.

8. Method according to claim 7, wherein, when the secure element determines a change of environment, the secure element checks whether a status command issuance interval has been amended by receiving a start time - after the change of environment - from a time reference server, by awaiting a predetermined amount of status issuance intervals, by receiving an end time from the time reference server, and by dividing the difference between the start time and the end time through the predetermined amount of status issuance intervals.

9. Method according to claim 7 or 8, wherein, when the secure element determines a change of environment, the secure element, in particular an applet on the secure element, determines upon the change of the environment an associated bearer, wherein the bearer is selected from a list of available bearers.

10. Method according to any one of the preceding claims, wherein, when sending data to the mobile terminal, the server uses at least two different data destination addresses associated to the mobile terminal.

11. Method of providing data from a mobile terminal to a server, wherein the mobile terminal comprises a secure element and is configured to communicate with the server via a plurality of communication channels, including a mobile communications network,
wherein the method comprises the following steps:
initiating a communication between the secure element and a server via at least one of the plurality of communication channels,
sending at least one test data packet from the mobile terminal to the server, wherein the test data packet can be divided into a plurality of data fragments, wherein the data fragments have a predetermined equal buffer size, and the method being **characterised by** measuring the elapsed data transfer time for the test data packet; varying the buffer size for data fragmentation to a different buffer size; and repeating the steps of sending the test data packet, measuring and varying until a minimum data transfer time for the test data packet is determined.

## Patentansprüche

1. Verfahren zum Bereitstellen von Daten von einem Server zu einem mobilen Endgerät, das ein Sicherheitselement umfasst und konfiguriert ist, um mit dem Server über eine Vielzahl von Kommunikationskanälen einschließlich eines Mobilkommunikationsnetzes zu kommunizieren,
wobei das Verfahren die folgenden Schritte umfasst:
Einleiten einer Kommunikation zwischen dem Sicherheitselement und einen Server über mindestens einen der Vielzahl von Kommunikationskanälen,
Senden mindestens eines Test-Datenpakets von dem Server, insbesondere einem Puffergrößen-Test-Server, an das mobile Endgerät, wobei das Test-Datenpaket in eine Vielzahl von Datenfragmenten unterteilt werden kann, wobei die Datenfragmente eine vorbestimmte gleiche Puffergröße haben,
und wobei das Verfahren **gekennzeichnet ist durch**
Messen der verstrichenen Datenübertragungszeit für das Test-Datenpaket;
Variieren der Puffergröße zur Datenfragmentierung zu einer anderen Puffergröße;
und Wiederholen der Schritte des Sendens des Test-Datenpakets, des Messens und des Variierens, bis eine minimale Datenübertragungszeit für das Test-Datenpaket bestimmt ist.

2. Verfahren nach Anspruch 1, wobei der Schritt des Variierens der Puffergröße das Erhöhen der Puffergröße umfasst.

3. Verfahren nach Anspruch 2, wobei der Schritt des Erhöhens der Puffergröße das Erhöhen der Puffergröße um eine Größenordnung von 100% im Vergleich zu der vorherigen vorbestimmten Puffergröße umfasst, wobei eine Startpuffergröße der vorbestimmten Puffergröße 512 Bytes beträgt.

4. Verfahren nach Anspruch 3, wobei der Schritt des Erhöhens der Puffergröße ein Variieren der Puffergröße um eine Größenordnung von 50% im Vergleich zu der vorherigen vorbestimmten Puffergröße umfasst, falls bei Erhöhung der Puffergröße bestimmt wird, dass die Puffergröße, die um eine Größenordnung von 100% gegenüber der vorherigen vorbestimmten Puffergröße erhöht wurde, von dem mobilen Endgerät nicht unterstützt und/oder zu einer Verlängerung der Datenübertragungszeit führt.

5. Verfahren nach einem der vorhergehenden Ansprüche, wobei das mobile Endgerät, insbesondere das Sicherheitselement, und/oder der Server angepasst ist/sind, um die verstrichene Datenübertragungszeit zu messen.

6. Verfahren nach einem der vorhergehenden Ansprüche, wobei das gleiche Test-Datenpaket mehrfach unter Verwendung der gleichen vorbestimmten Puffergröße gesendet werden kann, um zu bestimmen, ob die verstrichene Datenübertragungszeit variiert.

7. Verfahren nach einem der vorhergehenden Ansprüche, wobei der Schritt des Einleitens einer Kommunikation zwischen dem Sicherheitselement und dem Server durch das Ermitteln einer Änderung der Umgebung durch das Sicherheitselement ausgelöst wird, insbesondere einer Änderung des mobilen Endgeräts, in dem das Sicherheitselement angeordnet ist, einer Änderung des Orts, an dem sich das Sicherheitselement befindet, einer Änderung einer auf dem mobilen Endgerät installierten Firmware und/oder einer Änderung eines Mobilfunknetzes, mit dem das Sicherheitselement verbunden ist.

8. Verfahren nach Anspruch 7, wobei dann, wenn das Sicherheitselement eine Änderung der Umgebung ermittelt, das Sicherheitselement prüft, ob ein Statusbefehlsausgabeintervall durch Empfangen einer Startzeit - nach dem Ändern der Umgebung - von einem Zeitreferenzserver, durch Erwarten einer vorbestimmten Anzahl von Statusausgabeintervallen, durch Empfangen einer Endzeit von dem Zeitreferenzserver, und durch Dividieren der Differenz zwischen der Startzeit und der Endzeit durch die vorbestimmte Anzahl von Statusausgabeintervallen geändert wurde.

9. Verfahren nach Anspruch 7 oder 8, wobei dann, wenn das Sicherheitselement eine Änderung der Umgebung ermittelt, das Sicherheitselement, insbesondere ein Applet auf dem Sicherheitselement, der Änderung der Umgebung nachfolgend einen zugeordneten Träger bestimmt, wobei der Träger aus einer Liste verfügbarer Träger ausgewählt ist.

10. Verfahren nach einem der vorhergehenden Ansprüche, wobei dann, wenn Daten an das mobile Endgerät gesendet werden, der Server wenigstens zwei verschiedene Datenzieladressen verwendet, die dem mobilen Endgerät zugeordnet sind.

11. Verfahren zum Bereitstellen von Daten von einem mobilen Endgerät zu einem Server, wobei das mobile Endgerät ein Sicherheitselement umfasst und konfiguriert ist, um mit dem Server über eine Vielzahl von Kommunikationskanälen einschließlich eines Mobilkommunikationsnetzes zu kommunizieren,
wobei das Verfahren die folgenden Schritte umfasst:
Einleiten einer Kommunikation zwischen dem Sicherheitselement und einen Server über mindestens einen der Vielzahl von Kommunikationskanälen,
Senden mindestens eines Test-Datenpakets von dem mobilen Endgerät an den Server, wobei das Test-Datenpaket in eine Vielzahl von Datenfragmenten unterteilt werden kann, wobei die Datenfragmente eine vorbestimmte gleiche Puffergröße haben,
und wobei das Verfahren **gekennzeichnet ist durch**
Messen der verstrichenen Datenübertragungszeit für das Test-Datenpaket;
Variieren der Puffergröße zur Datenfragmentierung zu einer anderen Puffergröße;
und Wiederholen der Schritte des Sendens des Test-Datenpakets, des Messens und des Variierens, bis eine minimale Datenübertragungszeit für das Test-Datenpaket bestimmt ist.

## Revendications

1. Procédé destiné à fournir des données d'un serveur vers un terminal mobile comprenant un élément sécurisé et configuré pour communiquer avec le serveur via une pluralité de canaux de communication, incluant un réseau de télécommunications mobiles,
dans lequel le procédé comprend les étapes suivantes :
initialiser une communication entre l'élément sécurisé et un serveur via au moins un parmi la pluralité de canaux de communication, et
envoyer au moins un paquet de données de test provenant du serveur, en particulier un serveur de test de dimensionnement de tampon, vers le terminal mobile, dans lequel le paquet de données de test peut être divisé en une pluralité de fragments de données, dans lequel les fragments de données présentent une taille de tampon égale prédéterminée, et
le procédé étant **caractérisé par** les étapes consistant à
mesurer le temps de transfert de données écoulé pour le paquet de données de test ;
faire varier la taille de tampon pour une fragmentation de données en une taille de tampon différente, et
répéter les étapes d'envoi du paquet de données de test, puis mesurer et faire varier jusqu'à ce qu'un temps de transfert de données minimal pour le paquet de données de test soit déterminé.

2. Procédé selon la revendication 1, dans lequel l'étape pour faire varier la taille de tampon comprend l'augmentation de la taille de tampon.

3. Procédé selon la revendication 2, dans lequel l'étape pour augmenter la taille de tampon comprend l'augmentation de la taille de tampon avec une ampleur de 100% par comparaison avec la taille de tampon précédente prédéterminée, dans lequel une taille de tampon de départ de la taille de tampon prédéterminée est de 512 octets.

4. Procédé selon la revendication 3, dans lequel l'étape pour augmenter la taille de tampon comprend la variation de la taille de tampon avec une ampleur de 50% par comparaison avec la taille de tampon précédente prédéterminée, si lors de l'augmentation de taille, il est déterminé que la taille de tampon, laquelle a été augmentée avec une ampleur de 100% par comparaison avec la taille de tampon précédente prédéterminée, n'est pas supportée par le terminal mobile et/ou conduit à une augmentation du temps de transfert de données.

5. Procédé selon l'une quelconque des revendications précédentes, dans lequel le terminal mobile, en particulier l'élément sécurisé, et/ou le serveur sont aptes à mesurer le temps de transfert de données écoulé.

6. Procédé selon l'une quelconque des revendications précédentes, dans lequel le même paquet de données de test peut être envoyé plusieurs fois en utilisant la même taille de tampon prédéterminée afin de déterminer si le temps de transfert de données écoulé varie.

7. Procédé selon l'une quelconque des revendications précédentes, dans lequel l'étape d'initialisation d'une communication entre l'élément sécurisé et le serveur est déclenchée par l'élément sécurisé déterminant un changement d'environnement, en particulier un changement de terminal mobile dans lequel l'élément sécurisé est agencé, un changement d'endroit où se trouve l'élément sécurisé, un changement de micrologiciel installé sur le terminal mobile, et/ou un changement d'un réseau mobile sur lequel l'élément sécurisé est connecté.

8. Procédé selon la revendication 7, dans lequel lorsque l'élément sécurisé détermine un changement d'environnement, l'élément sécurisé vérifie su oui ou non un intervalle d'émission de commande d'état a été modifié en recevant un temps de début, après le changement d'environnement, provenant d'un serveur de temps de référence, en attendant une quantité prédéterminée d'intervalles d'émission d'état, en recevant un temps de fin provenant du serveur de temps de référence, et en divisant la différence entre le temps de début et le temps de fin par la quantité prédéterminée d'intervalles d'émission d'état.

9. Procédé selon la revendication 7 ou 8, dans lequel l'élément sécurisé détermine un changement d'environnement ; l'élément sécurisé, en particulier une mini-application sur l'élément sécurisé, détermine lors du changement de l'environnement un porteur associé, et dans lequel le porteur est sélectionné parmi une liste de porteurs disponibles.

10. Procédé selon l'une quelconque des revendications précédentes, dans lequel lors de l'envoi des données vers le terminal mobile, le serveur utilise au moins deux adresses de destination de données différentes associées au terminal mobile.

11. Procédé destiné à fournir des données d'un terminal mobile vers un serveur, dans lequel le terminal mobile comprend un élément sécurisé et est configuré pour communiquer avec le serveur via une pluralité de canaux de communication, incluant un réseau de télécommunications mobiles :
dans lequel le procédé comprend les étapes suivantes :
initialiser une communication entre l'élément sécurisé et un serveur via au moins un parmi la pluralité de canaux de communication, et
envoyer au moins un paquet de données de test provenant du terminal mobile vers le serveur, dans lequel le paquet de données de test peut être divisé en une pluralité de fragments de données, dans lequel les fragments de données présentent une taille de tampon égale prédéterminée, et
le procédé étant **caractérisé par** les étapes consistant à
mesurer le temps de transfert de données écoulé pour le paquet de données de test ;
faire varier la taille de tampon pour une fragmentation de données en une taille de tampon différente, et
répéter les étapes d'envoi du paquet de données de test, puis mesurer et faire varier jusqu'à ce qu'un temps de transfert de données minimal pour le paquet de données de test soit déterminé.
